# EUROPÄISCHE PATENTSCHRIFT

(11) **EP 2 196 953 B1**
(45) Veröffentlichungstag und Bekanntmachung des Hinweises auf die Patenterteilung: **08.04.2020**
(21) Anmeldenummer: 08021605.4
(22) Anmeldetag: 12.12.2008
(51) Int. Cl.: G06Q 10/00, B65G 63/00

(54) **Verfahren, Steuerungsprogramm und System zur Identifikation eines Containers in einer Containerkrananlage**
Method, control program and system for identifying a container in a container crane assembly
Procédé, programme de commande et système destinés à l'identification d'un conteneur dans une installation de grue pour conteneurs

(43) Veröffentlichungstag der Anmeldung: 16.06.2010
(73) Patentinhaber: Siemens Aktiengesellschaft, 80333 München (DE)
(72) Erfinder: Dennig, Uwe, 75203 Königsbach-Stein (DE); Dobler, Thomas, 76770 Hatzenbühl (DE)

(56) Entgegenhaltungen:
- EP-A- 0 594 061
- US-A- 6 026 177
- US-A1- 2004 126 015
- US-A1- 2008 252 417
- ASIA VISION TECHNOLOGY LTD.: "VECON-SPREADER, Container Number Recognition System for Effective Terminal Management" INTERNET ARTICLE, [Online] 27. Oktober 2007 (2007-10-27), XP002529756 Gefunden im Internet: URL:http://www.asiavision.com.hk/download/ leaflet/spreader_eng.pdf> [gefunden am 2009-05-27]
- ASIA VISION TECHNOLOGY LTD: "VECON-SPREADER, Container Number Recognition System for Effective Terminal Management" INTERNET ARTICLE, [Online] 27. Oktober 2007 (2007-10-27), XP002529757 Gefunden im Internet: URL:http://web.archive.org/web/20071027180 657/www.asiavision.com.hk/structure.php?pa ge=product_tech&product=vecon_spreader&mai n_index=2&sub_index=5&lang=eng> [gefunden am 2009-05-27]

## Beschreibung

Nicht zuletzt aufgrund verschärfter gesetzlicher Anforderungen hinsichtlich einer umgehenden Identifikation von Containern und deren Inhalt bei einer Entladung in Ziel-Häfen kommt einer zuverlässigen und schnellen Erfassung von Containeridentifikatoren, wie Containernummern, eine steigende Bedeutung zu. Auch aus logistischen Gründen wird eine zuverlässige und schnelle Erfassung gefordert, um zur Reduktion von Umschlagszeiten sicherzustellen, daß jeder Container auf einem ihm zugeordneten Platz in einem Stapelbereich eines Containerterminals oder eines Schiffs abgestellt ist.

In der Vergangenheit wurden Containernummern durch Kontrollpersonen in einem Containerterminal oder von Kranführern abgelesen und in Listen eingetragen, beispielsweise unter Verwendung tragbarer elektronischer Erfassungsgeräte. Hierdurch entstanden ein hoher Personal- und Zeitaufwand sowie ein erhöhtes Risiko von Fehleingaben beim Erfassen und Vergleichen von Ladelisten.

Grundsätzlich könnten Container mittels RFID-Tags und entsprechender Lesegeräte identifiziert werden. Für eine Akzeptanz derartiger Lösungen ist es wichtig, daß standardisierte RFID-Tags und Lesegeräte durchgängig im wesentlichen in sämtlichen Containerterminals verwendet werden. Ansonsten entstünden Insellösungen, die erhöhte Infrastrukturaufwendungen für konkurrierende Erfassungssysteme verursachen würden. Aus diesem Grund konnten sich RFID-basierte Containeridentifikationssysteme bisher nicht bei Betreibern von Containerterminals durchsetzen.

Eine Alternative zu RFID-basierten Containeridentifikationssystemen sind OCR-basierte Systeme, mittels derer an Containerseitenwänden aufgebrachte Containeridentifikatoren aufgenommen und detektiert werden. Solche Systeme sind beispielsweise bekannt aus US 2008/0252417 A1 und der US 2004/0126015 A1.

Dies bedingt jedoch, daß an Kränen montierte Kameras deutlich über Kranbauteile, wie Spreader, herausragen. Aus Platzgründen sind derartige Systeme aufgrund ungünstiger Montagepositionen der Kameras nicht in jede Krananlage integrierbar. Dies verhindert wiederum eine durchgehende Akzeptanz o.g. OCR-basierter Systeme.

Aus einem Internet-Artikel von ASIA VISION TECHNOLOGY LTD.: "VECON-SPREADER, Container Number Recognition System for Effective Terminal Management", 27. Oktober 2007, XP002529756, ist ein OCR-basiertes System bekannt, welches Containeridentifikatoren auf der Containeroberseite mit Hilfe von Kameras am Spreader erfasst.

Der vorliegenden Erfindung liegt die Aufgabe zugrunde, ein schnelles und zuverlässiges Verfahren zur Identifikation eines Containers in einer Containerkrananlage zu schaffen, das sich einfach in bestehende Containerkrananlagen integrieren läßt, sowie eine geeignete Realisierung des Verfahrens anzugeben.

Diese Aufgabe wird erfindungsgemäß durch ein Verfahren mit den in Anspruch 1 angegebenen Merkmalen, durch ein Steuerungsprogramm mit den in Anspruch 7 angegebenen Merkmalen und durch ein System mit den in Anspruch 8 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren werden zur Identifikation eines Containers in einer Containerkrananlage mittels zumindest zweier jeweils an einem containerstirnseitigen

Ende eines Spreaders angeordneter Kameras Ecken eines Containers detektiert und lokalisiert. Auf diese Weise können die Kameras beispielsweise zur Verbesserung von Erkennungsergebnissen genauer auf den Container ausgerichtet werden. Bei einem vorgebbaren Abstand zwischen Spreader und Container werden mittels der Kameras alphanumerische Containeridentifikatoren aufgenommen, die an stirnseitigen Enden einer Containeroberseite angeordnet sind, und einer optischen Zeichenerkennungsvorrichtung zugeführt, wobei der Abstand zwischen Spreader und Container durch eine Sensoreinheit, die mit einer Steuerungseinheit zur Aufnahme der Containeridentifikatoren und zur Zuführung der Aufnahme zu der Zeichenerkennungsvorrichtung verbunden ist, ermittelt wird. Die von den Kameras aufgenommenen Containeridentifikatoren werden durch die Zeichenerkennungsvorrichtung digital vorverarbeitet und mit einer Containerliste abgeglichen. Die Containerliste kann dabei als Wörterbuch zur Erhöhung einer Erkennungsgenauigkeit verwendet werden.

Aufgrund oben beschriebener Anordnung der Kameras läßt sich das erfindungsgemäße Verfahren problemlos in bestehende Containerkrananlagen integrieren. Außerdem wird vorteilhaft ausgenutzt, daß Container standardmäßig mit alphanumerischen Containeridentifikatoren an stirnseitigen Enden der Containeroberseite versehen sind, so daß das erfindungsgemäße Verfahren grundsätzlich durchgängig in sämtlichen Containerkrananlagen angewendet werden kann. Auch wenn ein alphanumerischer Containeridentifikator an einem stirnseitigen Ende beispielsweise durch Beschädigung oder Verschmutzung nicht ausgewertet werden kann, ist durch eine redundante zweite Kamera eine schnelle und zuverlässige automatisierte Containeridentifizierung ohne Benutzereingriff gewährleistet.

Ein weiterer Vorteil des erfindungsgemäßen Verfahrens besteht darin, daß zur Containeridentifikation keine zusätzliche Hubhöhenerfassung, beispielsweise mit Laserscanner, erforderlich ist. Vorteilhafterweise können sämtliche Identifikationsvor-, -zwischen- und -endergebnisse, wie Bilder oder detektierte Container-Nummern, für eine Dokumentation und Analyse in einer Speichereinrichtung aufgezeichnet werden, beispielsweise in einem Endlosringspeicher.

Entsprechend einer bevorzugten Weiterbildung der vorliegenden Erfindung werden Zeichenerkennungsergebnisse, die den von den Kameras aufgenommenen Containeridentifikatoren zugeordnet sind, auf Übereinstimmung verglichen, und bei einem positiven Vergleichsergebnis erfolgt eine Validierung des Zeichenerkennungsergebnisses. Auf diese Weise werden aus zwei Kameraaufnahmen abgeleitete Ergebnisse gegeneinander zur Erhöhung der Erkennungsgenauigkeit plausibilisiert.

Vorzugsweise erfolgt bei einem negativen Vergleichsergebnis eine Signalisierung übereinstimmender bzw. sich unterscheidender Bestandteile der Zeichenerkennungsergebnisse. Die Signalisierung übereinstimmender bzw. sich unterscheidender Bestandteile der Zeichenerkennungsergebnisse kann dabei an einer Benutzerschnittstelle erfolgen. Außerdem kann eine Benutzerkorrektur fehlerhafter Bestandteile unter Verwendung zumindest einer Kameraaufnahme eines Containeridentifikators, die an der Benutzerschnittstelle visualisiert wird, angefordert werden.

Die Zeichenerkennungsergebnisse werden entsprechend einer vorteilhaften Weiterbildung der vorliegenden Erfindung anhand einer Herstellerkennung, einer Containernummer und einer Prüfziffer plausibilisiert. Darüber hinaus kann die Containerliste einem von einem Schiff an ein Hafenterminal übermittelten Verladeplan entnommen werden.

Das erfindungsgemäße Steuerungsprogramm zur Identifikation eines Containers in einer Containerkrananlage ist in einen Arbeitsspeicher eines Rechners ladbar und weist zumindest einen Codeabschnitt auf. Bei Ausführung des Codeabschnitts werden mittels zumindest zweier jeweils an einem containerstirnseitigen Ende eines Spreaders angeordneter Kameras Ecken eines Containers detektiert und lokalisiert. Außerdem werden bei einem vorgebbaren Abstand zwischen Spreader und Container mittels der Kameras an stirnseitigen Enden einer Containeroberseite angeordnete alphanumerische Containeridentifikatoren aufgenommen und einer optischen Zeichenerkennungsvorrichtung zugeführt. Darüber hinaus werden die von den Kameras aufgenommenen Containeridentifikatoren durch die Zeichenerkennungsvorrichtung digital vorverarbeitet und mit einer Containerliste abgeglichen werden, wenn das Steuerungsprogramm auf dem Rechner abläuft.

Das erfindungsgemäße System zur Identifikation eines Containers in einer Containerkrananlage umfaßt zumindest zwei jeweils an einem containerstirnseitigen Ende eines Spreaders angeordnete Kameras zur Detektion und Lokalisierung von Ecken eines Containers. Außerdem ist eine Steuerungseinrichtung zur Aufnahme von an stirnseitigen Enden einer Containeroberseite angeordneten alphanumerischen Containeridentifikatoren mittels der Kameras - bei einem vorgebbaren Abstand zwischen Spreader und Container - und zur Zuführung der Aufnahme zu einer optischen Zeichenerkennungsvorrichtung vorgesehen. Darüber hinaus weist das erfindungsgemäße System eine optischen Zeichenerkennungsvorrichtung zur digitalen Vorverarbeitung der von Kameras aufgenommenen Containeridentifikatoren und zum Abgleich von Verarbeitungsergebnissen mit einer Containerliste auf.

Die Erfindung wird nachfolgend an einem Ausführungsbeispiel anhand der Zeichnung näher erläutert. Es zeigt
- Figur 1: eine schematische Darstellung eines Systems zur Identifikation eines Containers in einer Containerkrananlage,
- Figur 2: ein Ablaufdiagramm für ein Verfahren zur Identifikation eines Containers in einer Containerkrananlage,
- Figur 3: zwei zur Korrektur fehlerhafter Bestandteile eines Zeichenerkennungsergebnisses an einer Benutzerschnittstelle visualisierte Kameraaufnahmen von Containeridentifikatoren,
- Figur 4: zwei an einer Benutzerschnittstelle visualisierte übereinstimmende Zeichenerkennungsergebnisse in einem ersten Szenario,
- Figur 5: zwei an einer Benutzerschnittstelle visualisierte nicht übereinstimmende Zeichenerkennungsergebnisse in einem zweiten Szenario,
- Figur 6: zwei an einer Benutzerschnittstelle visualisierte unvollständige Zeichenerkennungsergebnisse in einem dritten Szenario.

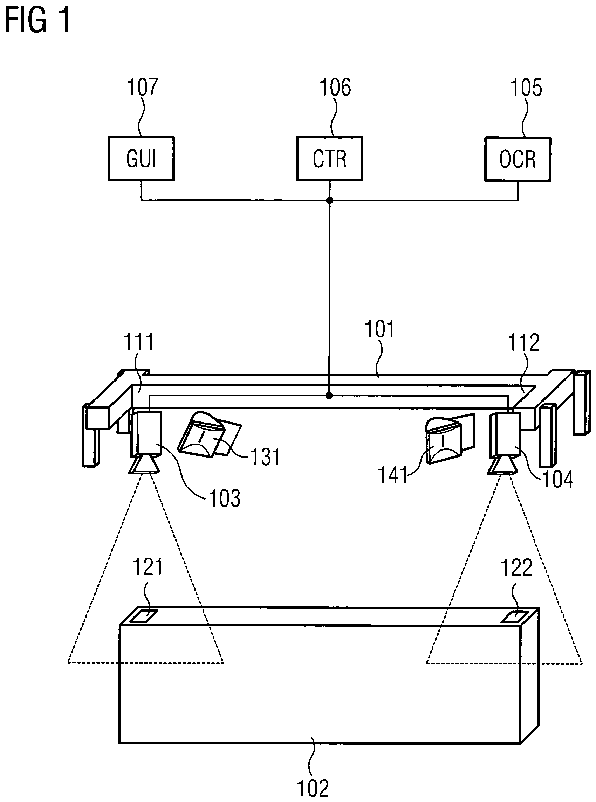

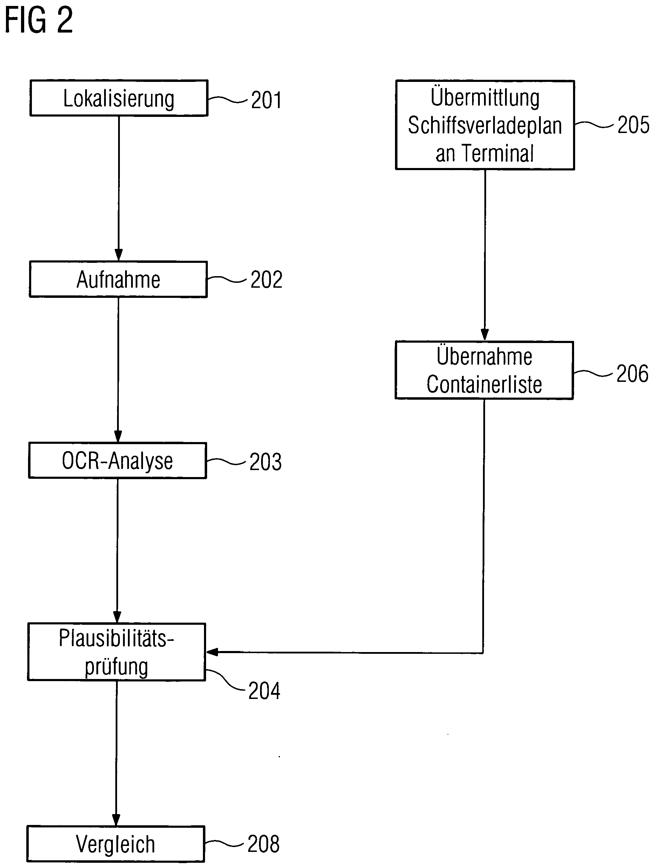

Das in Figur 1 dargestellte System umfaßt zwei Kameras 103, 104, die jeweils an einem containerstirnseitigen Ende 111, 112 eines Spreaders 101 angeordnet sind. Anhand der Kameras 103, 104 werden entsprechend Schritt 201 des in Figur 2 dargestellten Ablaufdiagramms Ecken eines Containers 102 detektiert und lokalisiert. Außerdem ist eine Steuerungseinrichtung 106 vorgesehen, beispielsweise eine SIMATIC S7, welche die Kameras 103, 104 und eine optische Zeichenerkennungseinrichtung 105 ansteuert und mit einer graphischen Benutzerschnittstelle 107 verbunden ist.

Die Kameras 103, 104 können beispielsweise über Lichtwellenleiter von der Steuerungseinrichtung 106 angesteuert werden. Bei der graphischen Benutzerschnittstelle 107 kann es sich beispielsweise um einen Touch PC, einen Pocket PC oder ein hinsichtlich Rechenleistung und Benutzerkomfort vergleichbares rechnerbasiertes Gerät handeln. Um Tageslisteinflüssen zu eliminieren, ist vorzugsweise zusätzlich nahe jeder Kamera 103, 104 ein Halogenstrahler 131, 141 oder eine vergleichbare Lichtquelle angebracht, die einen jeweiligen Abtastbereich der Kameras 103, 104 ausleuchtet.

Nach Vorgabe durch die Steuerungseinrichtung 106 werden in Schritt 202 gemäß Figur 2 bei einem vorgebbaren Abstand zwischen Spreader 101 und Container 102 mittels der Kameras 103, 104 alphanumerische Containeridentifikatoren 121, 122 aufgenommen, die an stirnseitigen Enden einer Containeroberseite angeordnet sind. Der Abstand zwischen Spreader 101 und Container 102 wird durch eine in Figur 1 nicht explizit dargestellte Sensoreinheit ermittelt, die mit der Steuerungseinrichtung 106 verbunden ist. Aufnahmen der Containeridentifikatoren 121, 122 werden der optischen Zeichenerkennungsvorrichtung 105 durch die Steuerungseinrichtung 106 zugeführt.

Entsprechend Schritt 203 des in Figur 2 dargestellten Ablaufdiagramms werden die Aufnahmen durch die optische Zeichenerkennungsvorrichtung digital vorverarbeitet. Anschließend werden Verarbeitungsergebnisse der optischen Zeichenerkennungsvorrichtung mit einer Containerliste im Rahmen einer Plausibilitätsprüfung abgeglichen (Schritt 204). Hierzu werden in weiteren Verfahrensschritten zunächst ein Schiffsverladeplan an ein Hafenterminal übermittelt (Schritt 205) und anschließend die daraus abgeleitete Containerliste quasi als Wörterbuch in die optische Zeichenerkennungseinrichtung 105 übernommen (Schritt 206).

Abschließend werden in Schritt 207 Zeichenerkennungsergebnisse, die den von den Kameras 103, 104 aufgenommenen Containeridentifikatoren 121, 122 zugeordnet sind, auf Übereinstimmung verglichen. Bei einem positiven Vergleichsergebnis erfolgt eine Übernahme des übereinstimmenden Zeichenerkennungsergebnisses.

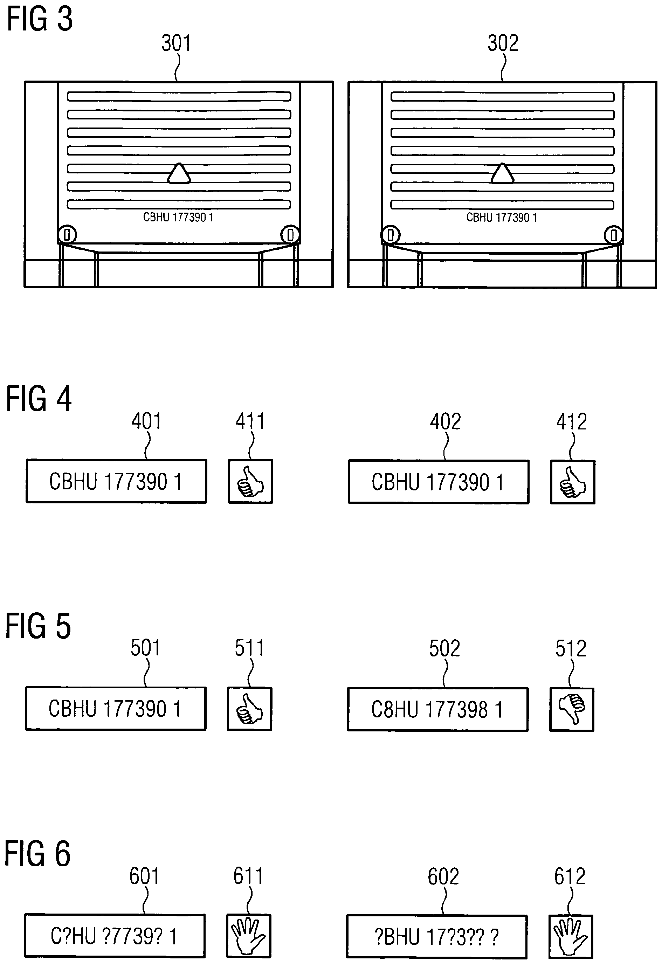

Bei einem negativen Vergleichsergebnis erfolgt entsprechend einer bevorzugten Ausgestaltung der vorliegenden Erfindung eine Signalisierung übereinstimmender bzw. sich unterscheidender Bestandteile der Zeichenerkennungsergebnisse. Zur Korrektur fehlerhafter Bestandteile des Zeichenerkennungsergebnisses werden an der Benutzerschnittstelle 107 für einen Kranfahrer oder eine Kontrollperson Kameraaufnahmen der Containeridentifikatoren 301, 302 gemäß Figur 3 visualisiert.

Zusätzlich zu den Kameraaufnahmen 301, 302 werden an der Benutzerschnittstelle 107 die den Kameraaufnahmen 301, 302 zugeordneten Zeichenerkennungsergebnisse zur Kontrolle dargestellt. In den Figuren 4 bis 6 ist dies für 3 unterschiedliche Szenarien mit übereinstimmenden, nicht übereinstimmenden oder unvollständigen Zeichenerkennungsergebnissen dargestellt.

Entsprechend Figur 4 werden übereinstimmende Zeichenerkennungsergebnisse in speziellen Anzeigebereichen 401, 402 der Benutzerschnittstelle 107 dargestellt und entsprechend einem Zeichenerkennungsstatus farblich unterlegt, beispielsweise in grün bei vollständiger und übereinstimmender Erkennung. Neben den Anzeigebereichen 401, 402 sind den Anzeigebereichen 401, 402 zugeordnete Aktionsschaltflächen 411, 421 angeordnet, über welche eine zusätzliche Visualisierung des Zeichenerkennungsstatus erfolgt und statusabhängig eine ausgewählte Funktion verfügbar gemacht wird, um eine Benutzerreaktion auf die Zeichenerkennungsergebnisse zu ermöglichen.

Die entsprechend Figur 5 und 6 in speziellen Anzeigebereichen 501, 502, 601, 602 dargestellten Zeichenerkennungsergebnisse spiegeln Szenarien mit nicht übereinstimmender bzw. unvollständiger Zeichenerkennung wider. Entsprechend Figur 5 sind die Zeichenerkennungsergebnisse vollständig, stimmen aber nicht überein, während entsprechend Figur 6 die Zeichenerkennungsergebnisse unvollständig und nicht übereinstimmend sind. Dementsprechend werden über die Aktionsschaltflächen 511, 512, 611, 612 Funktionen verfügbar gemacht, um ein ausgewähltes Zeichenerkennungsergebnis als korrekt zu bestätigen, oder um ein unvollständiges Zeichenerkennungsergebnis zu ergänzen bzw. zu korrigieren.

Entsprechend einer Ausgestaltung der vorliegenden Erfindung wird eine OCR-Analyse während eines Absetzvorgangs ständig wiederholt, und gelesene Daten werden fortlaufend in einem Zwischenspeicher gesammelt. Ein Identifikationsvorgang wird dann beispielsweise abgeschlossen, wenn der Spreader 101 auf dem Container 102 aufsetzt und Einrastelemente, wie Flipper, geschlossen sind. Dies kann durch eine entsprechende Konfigurierung bzw. Programmierung der Steuerungseinrichtung 106 realisiert werden.

Das vorangehend beschriebene Verfahren kann beispielsweise durch ein Steuerungsprogramm implementiert werden, das in einen Arbeitsspeicher einer rechnerbasierten Steuerungseinrichtung 106 ladbar ist und zumindest einen Codeabschnitt aufweist. Bei Ausführung dieses Codeabschnitts werden vorangehend beschriebene Verfahrensschritte ausgeführt, wenn das Steuerungsprogramm auf der rechnerbasierten Steuerungseinrichtung 106 abläuft.

Die Anwendung der vorliegenden Erfindung ist nicht auf das beschriebene Ausführungsbeispiel beschränkt.

## Patentansprüche

1. Verfahren zur Identifikation eines Containers in einer Containerkrananlage, bei dem
- mittels zumindest zweier jeweils an einem containerstirnseitigen Ende eines Spreaders angeordneter Kameras Ecken eines Containers detektiert und lokalisiert werden,
- bei einem vorgebbaren Abstand zwischen Spreader und Container mittels der Kameras an stirnseitigen Enden einer Containeroberseite angeordnete alphanumerische Containeridentifikatoren aufgenommen und einer optischen Zeichenerkennungsvorrichtung zugeführt werden,
- wobei der Abstand zwischen Spreader und Container durch eine Sensoreinheit, die mit einer Steuerungseinrichtung zur Aufnahme der Containeridentifikatoren und zur Zuführung der Aufnahme zu der Zeichenerkennungsvorrichtung verbunden ist, ermittelt wird und
- die von den Kameras aufgenommenen Containeridentifikatoren durch die Zeichenerkennungsvorrichtung digital vorverarbeitet und mit einer Containerliste abgeglichen werden.

2. Verfahren nach Anspruch 1,
bei dem den von den Kameras aufgenommenen Containeridentifikatoren zugeordnete Zeichenerkennungsergebnisse auf Übereinstimmung verglichen werden, und bei dem bei einem positiven Vergleichsergebnis eine Validierung des Zeichenerkennungsergebnisses erfolgt.

3. Verfahren nach Anspruch 2,
bei dem bei einem negativen Vergleichsergebnis eine Signalisierung übereinstimmender und/oder sich unterscheidender Bestandteile der Zeichenerkennungsergebnisse erfolgt.

4. Verfahren nach Anspruch 3,
bei dem die Signalisierung übereinstimmender und/oder sich unterscheidender Bestandteile der Zeichenerkennungsergebnisse an einer Benutzerschnittstelle erfolgt und eine Benutzerkorrektur fehlerhafter Bestandteile unter Verwendung zumindest einer an der Benutzerschnittstelle visualisierten Kameraaufnahme eines Containeridentifikators angefordert wird.

5. Verfahren nach einem der Ansprüche 1 bis 4,
bei dem die Zeichenerkennungsergebnisse anhand einer Herstellerkennung, einer Containernummer und einer Prüfziffer plausibilisiert werden.

6. Verfahren nach einem der Ansprüche 1 bis 5,
bei dem die Containerliste einem von einem Schiff an ein Hafenterminal übermittelten Verladeplan entnommen wird.

7. Steuerungsprogramm zur Identifikation eines Containers in einer Containerkrananlage, das in einen Arbeitsspeicher eines Rechners ladbar ist und zumindest einen Codeabschnitt aufweist, bei dessen Ausführung
- mittels zumindest zweier jeweils an einem containerstirnseitigen Ende eines Spreaders angeordneter Kameras Ecken eines Containers detektiert und lokalisiert werden,
- bei einem vorgebbaren Abstand zwischen Spreader und Container mittels der Kameras an stirnseitigen Enden einer Containeroberseite angeordnete alphanumerische Containeridentifikatoren aufgenommen und einer optischen Zeichenerkennungsvorrichtung zugeführt werden,
- wobei der Abstand zwischen Spreader und Container durch eine Sensoreinheit, die mit einer Steuerungseinrichtung zur Aufnahme der Containeridentifikatoren und zur Zuführung der Aufnahme zu der Zeichenerkennungsvorrichtung verbunden ist, ermittelt wird und
- die von den Kameras aufgenommenen Containeridentifikatoren durch die Zeichenerkennungsvorrichtung digital vorverarbeitet und mit einer Containerliste abgeglichen werden,
wenn das Steuerungsprogramm auf dem Rechner abläuft.

8. System zur Identifikation eines Containers in einer Containerkrananlage mit
- zumindest zwei jeweils an einem containerstirnseitigen Ende eines Spreaders angeordneten Kameras zur Detektion und Lokalisierung von Ecken eines Containers,
- einer Steuerungseinrichtung zur Aufnahme von an stirnseitigen Enden einer Containeroberseite angeordneten alphanumerischen Containeridentifikatoren mittels der Kameras bei einem vorgebbaren Abstand zwischen Spreader und Container und zur Zuführung der Aufnahme zu einer optischen Zeichenerkennungsvorrichtung,
- einer Sensoreinheit, die mit der Steuerungseinrichtung verbunden ist, zur Ermittlung des Abstands zwischen Spreader und Container und
- einer optischen Zeichenerkennungsvorrichtung zur digitalen Vorverarbeitung der von Kameras aufgenommenen Containeridentifikatoren und zum Abgleich von Verarbeitungsergebnissen mit einer Containerliste.

## Claims

1. Method for identifying a container in a container crane system, in which
- corners of a container are detected and located by means of at least two cameras arranged in each case at an end of a spreader at the end face of the container,
- alphanumeric container identifiers arranged at end-face ends of the top of a container are recorded by means of the cameras at a predeterminable distance between spreader and container, and are fed to an optical character recognition device,
- wherein the distance between spreader and container is determined by a sensor unit which is connected to a control device for recording the container identifiers and for feeding the image to the character recognition device and
- the container identifiers recorded by the cameras are digitally preprocessed by the character recognition device and compared with a container list.

2. Method according to claim 1,
in which the character recognition results associated with the container identifiers recorded by the cameras are compared for matches, and in the case of a positive comparison result the character recognition result is validated.

3. Method according to claim 2,
in which in the event of a negative comparison result, matching and/or differing components of the character recognition results are signalled.

4. Method according to claim 3,
in which the signalling of matching and/or differing components of the character recognition results takes place at a user interface and a user correction of incorrect components is requested using at least one camera image of a container identifier visualised on the user interface.

5. Method according to one of claims 1 to 4,
in which the character recognition results are checked for plausibility on the basis of a manufacturer's code, a container number and a check digit.

6. Method according to one of claims 1 to 5,
in which the container list is taken from a loading plan transmitted from a ship to a port terminal.

7. Control program for identifying a container in a container crane system, which can be loaded into a working memory of a computer and has at least one code section, during the execution of which
- corners of a container are detected and located by means of at least two cameras arranged in each case at an end of a spreader at the end face of the container,
- alphanumeric container identifiers arranged at end-face ends of the top of a container are recorded at a predeterminable distance between spreader and container, and are fed to an optical character recognition device,
- wherein the distance between spreader and container is determined by a sensor unit which is connected to a control device for recording the container identifiers and for feeding the image to the character recognition device and
- the container identifiers recorded by the cameras are digitally preprocessed by the character recognition device and compared with a container list,
when the control program runs on the computer.

8. System for identifying a container in a container crane system having
- at least two cameras arranged in each case at an end of a spreader at the end face of the container for detecting and locating corners of a container,
- a control device for recording alphanumeric container identifiers arranged at end-face ends of the top of a container by means of the cameras at a predeterminable distance between spreader and container, and for feeding the image to an optical character recognition device,
- a sensor unit which is connected to the control device for determining the distance between spreader and container and
- an optical character recognition device for digital preprocessing of the container identifiers recorded by cameras and for comparing processing results with a container list.

## Revendications

1. Procédé d'identification d'un conteneur dans une installation de grue pour conteneurs, dans lequel
- au moyen d'au moins deux caméras, montées chacune à une extrémité, du côté frontal du conteneur, d'un cadre de préhension, on détecte et on localise des coins d'un conteneur,
- pour une distance pouvant être donnée à l'avance entre le cadre de préhension et le conteneur, on enregistre, au moyen des caméras, des identifiants alphanumériques de conteneur, disposés aux extrémités du côté frontal d'un côté supérieur du conteneur et on les envoie à un système optique de reconnaissance de caractère,
- dans lequel on détermine la distance entre le cadre de préhension et le conteneur par une unité de capteur, qui est reliée à un dispositif de commande pour l'enregistrement des identifiants du conteneur et pour l'envoi de l'enregistrement au système de reconnaissance de caractère et
- on prétraite numériquement, par le système de reconnaissance de caractère, les identifiants de conteneur enregistrés par les caméras et on les ajuste à une liste de conteneurs.

2. Procédé suivant la revendication 1,
dans lequel on compare, pour coïncidence, des résultats de reconnaissance de caractère associés aux identifiants de conteneur enregistrés par les caméras, et dans lequel, si le résultat de la comparaison est positif, on effectue une validation du résultat de la reconnaissance de caractère.

3. Procédé suivant la revendication 2,
dans lequel, si le résultat de la comparaison est négatif, il se produit une signalisation des parties constituantes en coïncidence et/ou se distinguant des résultats de la reconnaissance de caractère.

4. Procédé suivant la revendication 3,
dans lequel la signalisation des parties constituantes en coïncidence et/ou se distinguant des résultats de la reconnaissance de caractère s'effectue sur une interface d'utilisateur et une correction par l'utilisateur de parties constituantes défectueuses est demandée, en utilisant au moins un enregistrement de camera, visualisé sur l'interface d'utilisateur, d'un identifiant de conteneur.

5. Procédé suivant l'une des revendications 1 à 4,
dans lequel on rend vraisemblables les résultats de reconnaissance de caractère à l'aide d'une reconnaissance de fabricant, d'un numéro de conteneur et d'un chiffre de contrôle.

6. Procédé suivant l'une des revendications 1 à 5,
dans lequel on prend la liste de conteneur d'un plan de charge transmis par un bateau à un terminal portuaire.

7. Programme de commande pour l'identification d'un conteneur d'une installation de grue pour conteneurs, qui peut être chargé dans une mémoire de travail d'un ordinateur et qui a au moins une partie de code, à la réalisation de laquelle
- au moyen d'au moins deux caméras, montées chacune à une extrémité, du côté frontal du conteneur, d'un cadre de préhension, on détecte et on localise des coins d'un conteneur,
- pour une distance pouvant être donnée à l'avance entre le cadre de préhension et le conteneur, on enregistre, au moyen des caméras, des identifiants alphanumériques de conteneur, disposés aux extrémités du côté frontal d'un côté supérieur du conteneur et on les envoie à un système optique de reconnaissance de caractère,
- dans lequel on détermine la distance entre le cadre de préhension et le conteneur par une unité de capteur, qui est reliée à un dispositif de commande pour l'enregistrement des identifiants du conteneur et pour l'envoi de l'enregistrement au système de reconnaissance de caractère et
- on prétraite numériquement, par le système de reconnaissance de caractère, les identifiants de conteneur enregistrés par les caméras et on les ajuste à une liste de conteneurs,
lorsque le programme de commande se déroule sur l'ordinateur.

8. Système d'identification d'un conteneur dans une installation de grue pour conteneurs, comprenant
- au moins deux caméras, montées chacune à une extrémité, du côté frontal du conteneur, d'un cadre de préhension pour la détection et la localisation de coins d'un conteneur,
- un dispositif de commande pour l'enregistrement d'identifiants alphanumériques de conteneur, disposé sur les extrémités du côté frontal d'un côté supérieur du conteneur, au moyen des caméras, en ayant une distance pouvant être donnée à l'avance entre le cadre de préhension et le conteneur et pour l'envoi des enregistrements à un système optique de reconnaissance de caractère,
- une unité de capteur, qui est reliée au dispositif de commande, pour déterminer la distance entre le cadre de préhension et le conteneur et
- un système optique de reconnaissance de caractère pour le prétraitement numérique des identifiants de conteneur enregistrés par des caméras et pour l'ajustement des résultats de traitement à une liste de conteneurs.
